# DEMANDE DE BREVET EUROPEEN

(11) **EP 1 870 299 A1**
(43) Date de publication de la demande: **26.12.2007**
(21) Numéro de dépôt: 07290525.0
(22) Date de dépôt: 27.04.2007
(51) Int. Cl.: B60R 21/13

(54) **Dispositif de sécurité en gas de retournement d'un véhicule**

(30) Priorité: 20.06.2006 FR 0605495
(71) Demandeur: Heuliez, 79140 Cerizay (FR)
(72) Inventeur: Hudon, Olivier, 49120 Chemille (FR)
(74) Mandataire: Bredema

(57) **Abrégé**

L'invention concerne un dispositif de sécurité (1) en cas de retournement d'un véhicule comprenant :
- au moins deux barres coudées (2a, 2b), déplaçables, en cas de retournement du véhicule, d'une position effacée vers une position déployée ;
- des moyens de rappel élastique (5a, 5b) pour le déploiement des barres (2a, 2b) ;
- un système de déclenchement (6) ;
- au moins un organe de verrouillage (7) qui maintient les moyens de rappel sous précontrainte et qui se libère grâce au système de déclenchement (6) libérant ainsi chaque barre coudée (2a, 2b) de sa position effacée.

Le support central (8) comprend deux plaques sensiblement parallèles définissant un logement, lesdites plaques s'étendant respectivement de part et d'autre du plan des barres (2a, 2b), les premières extrémités (3a, 3b) des barres coudées (2a, 2b) étant montées en rotation sur lesdites plaques et disposés à l'intérieur dudit logement.

L'invention concerne également un véhicule automobile équipé d'un tel dispositif de sécurité.

## Description

L'invention concerne un dispositif de sécurité en cas de retournement d'un véhicule automobile ainsi qu'un véhicule automobile équipé d'un tel dispositif.

Un tel dispositif est particulièrement destiné aux véhicules automobiles du type convertible en cabriolet. En effet, lorsque le toit d'un véhicule cabriolet est en position escamotée dans le coffre du véhicule, un dispositif de sécurité permet de protéger les passagers du véhicule en cas de retournement dudit véhicule.

L'invention concerne plus particulièrement un dispositif de sécurité en cas de retournement d'un véhicule comprenant :
- deux barres coudées dont une extrémité est montée en rotation sur un support de sorte à être mobiles, en cas de retournement du véhicule, d'une position effacée vers une position déployée ;
- des moyens de rappel élastique pour le déploiement automatique des barres coudées ;
- un système de déclenchement activé en cas de retournement du véhicule ;
- au moins un organe de verrouillage qui maintient les moyens de rappel sous précontrainte et qui se libère grâce au système de déclenchement libérant ainsi chaque barre coudée de sa position effacée.

De tels dispositifs sont notamment connus par les documents WO 2006/008352 ou FR 2871 757.

Dans les documents susmentionnés, la première extrémité des barres est montée en rotation sur une platine centrale et ladite platine centrale est montée sur une partie supérieure d'une partie de structure du véhicule telle qu'une poutre transversale. La première extrémité des barres est pourvue d'un tube engagé dans une partie tubulaire de la platine et un ressort de torsion est disposé entre le tube et la partie tubulaire. Une des extrémités du ressort est fixée au tube et l'autre extrémité est fixée à la partie tubulaire.

Par conséquent, dans l'art antérieur, bien que les moyens de rappel et les organes de verrouillage et de commande de ce type de dispositif soient groupés sur la platine centrale, l'encombrement du dispositif reste relativement conséquent, notamment au niveau de la platine.

En effet, l'épaisseur du dispositif au niveau de la platine correspond approximativement à la somme de l'épaisseur des barres et de la longueur de la partie tubulaire.

En outre, la platine est destinée à être fixée sur un élément de structure du véhicule mais n'est pas agencée pour être intégrée à l'intérieur d'un caisson formé dans un élément de structure du véhicule. Ainsi, la compacité du dispositif n'est pas optimale et peut être améliorée.

Par conséquent, dans l'art antérieur, les dispositifs de sécurité empiètent au moins en partie sur le volume de réception des éléments de toit lorsqu'ils sont dans leur position escamotée.

L'invention vise à remédier à ces problèmes en proposant un dispositif de sécurité en cas de retournement d'un véhicule dont l'encombrement est réduit. Ainsi, le dispositif de sécurité selon l'invention permet de diminuer la longueur du coffre arrière ou d'augmenter son volume.

A cet effet, et selon un premier aspect, l'invention propose un dispositif de sécurité en cas de retournement d'un véhicule comprenant :
- au moins deux barres coudées, chaque barre coudée possédant une première et une seconde extrémité, lesdites barres étant déplaçables, en cas de retournement du véhicule, d'une position effacée vers une position déployée ;
- des moyens de rappel élastique pour le déploiement automatique des barres coudées ;
- un système de déclenchement activé en cas de retournement du véhicule ;
- au moins un organe de verrouillage qui maintient les moyens de rappel sous précontrainte et qui se libère grâce au système de déclenchement libérant ainsi chaque barre coudée de sa position effacée ; et
- un support central sur lequel est montée articulée la première extrémité des barres.

Le support central comprend deux plaques sensiblement parallèles délimitant entre elles un logement, les deux plaques s'étendent respectivement de part et d'autre du plan dans lequel s'étendent les barres. Les premières extrémités des barres coudées sont montées en rotation sur lesdites plaques et disposées à l'intérieur dudit logement.

Ainsi, l'encombrement du dispositif selon l'axe longitudinal du véhicule est relativement restreint car il n'est que légèrement supérieur à la largeur des barres.

Avantageusement, les premières extrémités des barres coudées sont pourvues d'un axe, perpendiculaire au plan des barres, monté en rotation dans des alésages formées dans lesdites plaques.

Ainsi, l'articulation des barres sur les plaques est réalisée de façon simple et peu coûteuse.

Dans le mode de réalisation représenté, les moyens de rappel élastique sont des ressorts de compression disposés dans ledit logement, lesdits ressorts possédant une première extrémité montée articulée sur le support central et une seconde extrémité montée articulée sur la barre coudée, à proximité de sa première extrémité.

Avantageusement, le système de déclenchement et l'organe de verrouillage sont disposés dans ledit logement entre les deux plaques.

Ainsi, l'ensemble des éléments de commande des barres est regroupé de façon extrêmement compacte entre les deux plaques.

Dans un mode de réalisation, le support central est une pièce profilée en forme de U, les deux plaques sensiblement parallèles formant les branches latérales du U. Ainsi , le support central peut être réalisé d'un seul bloc.

Avantageusement, le dispositif de sécurité comprend en outre deux systèmes anti-retour coopérant avec la deuxième extrémité des barres lorsque lesdites barres sont en position déployée afin d'empêcher le retrait des barres vers leur position effacée. Les systèmes anti-retour sont logés dans des boîtiers latéraux formés par des pièces profilées.

Avantageusement, au moins deux barres de liaison relient le support central et les boîtiers latéraux afin de former un module pré-assemblé.

Avantageusement, le support central et/ou les boîtiers latéraux sont pourvus de moyens de fixation dudit dispositif à un élément de structure du véhicule.

Selon un deuxième aspect, l'invention concerne un véhicule automobile pourvu d'un dispositif de sécurité selon l'invention.

Avantageusement, le véhicule automobile est équipé d'un élément de structure disposé entre l'habitacle du véhicule et le coffre arrière et possédant à son extrémité supérieure un caisson creux dans lequel est inséré ledit dispositif de sécurité.

D'autres objets et avantages de l'invention apparaîtront au cours de la description qui suit, faite en référence aux dessins annexés, dans lesquels :
- la figure 1 est une vue de face du dispositif de sécurité selon l'invention, les barres coudées étant en position déployée ;
- la figure 2 est une vue de face du dispositif de sécurité selon l'invention, les barres coudées étant en position déployée et le support central et les boîtiers latéraux n'étant pas représentés ;
- la figure 3 est une vue de face du dispositif de sécurité, les barres coudées étant en position effacée ;
- la figure 4 est une vue de dessus du dispositif de sécurité;
- les figures 5a et 5b sont respectivement une vue de face et une vue de dessus du support central et d'un boîtier latéral ; et
- la figure 6 est une vue en coupe selon un axe longitudinal de l'arrière d'un véhicule automobile selon l'invention.

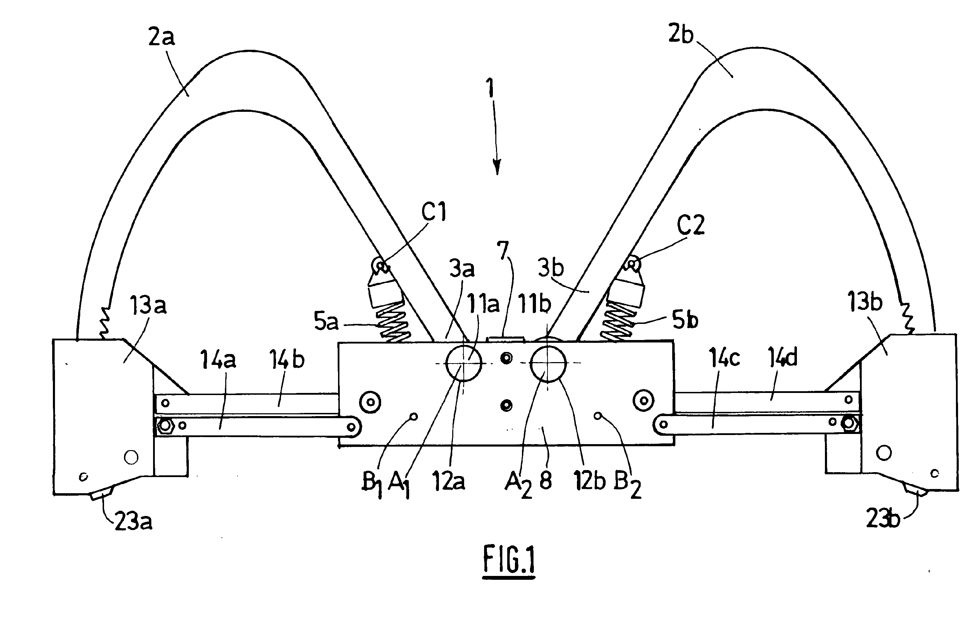

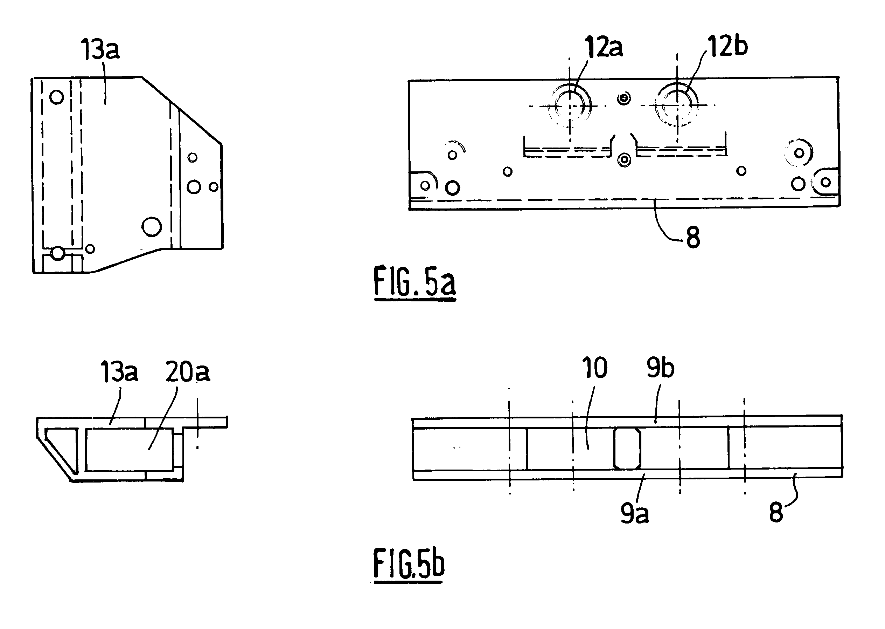

Le dispositif de sécurité 1 représenté sur les figures 1 à 5 est destiné à être fixé sur un élément de structure 14 du véhicule et disposé transversalement derrière la rangée de sièges arrière.

Le dispositif de sécurité 1 selon l'invention comprend deux barres coudées 2a, 2b ou tubes cintrées. Les barres 2a, 2b sont articulées symétriquement sur un support central 8. Les deux barres 2a, 2b étant symétriques, on ne décrira maintenant qu'une seule barre.

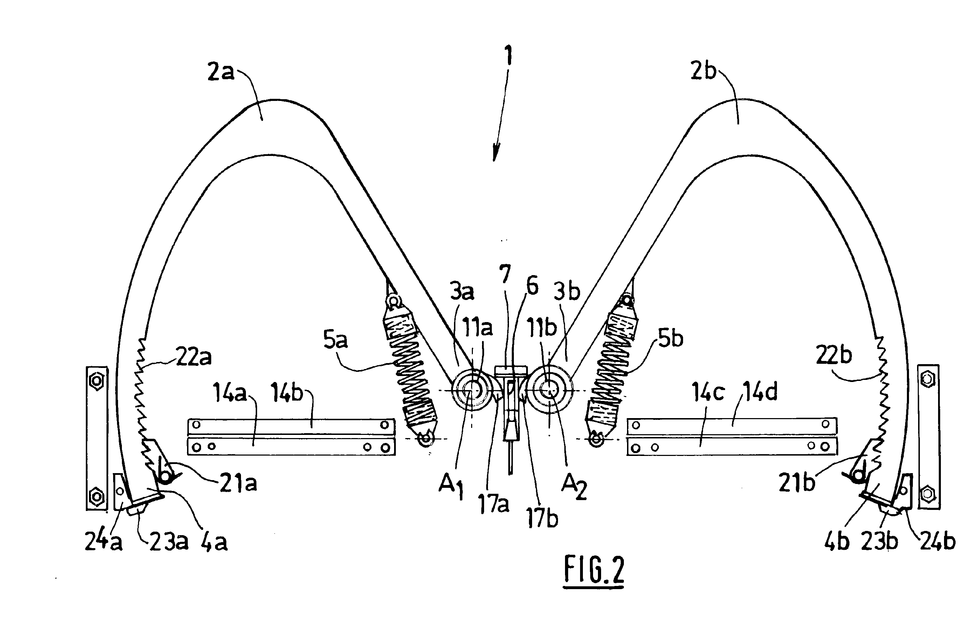

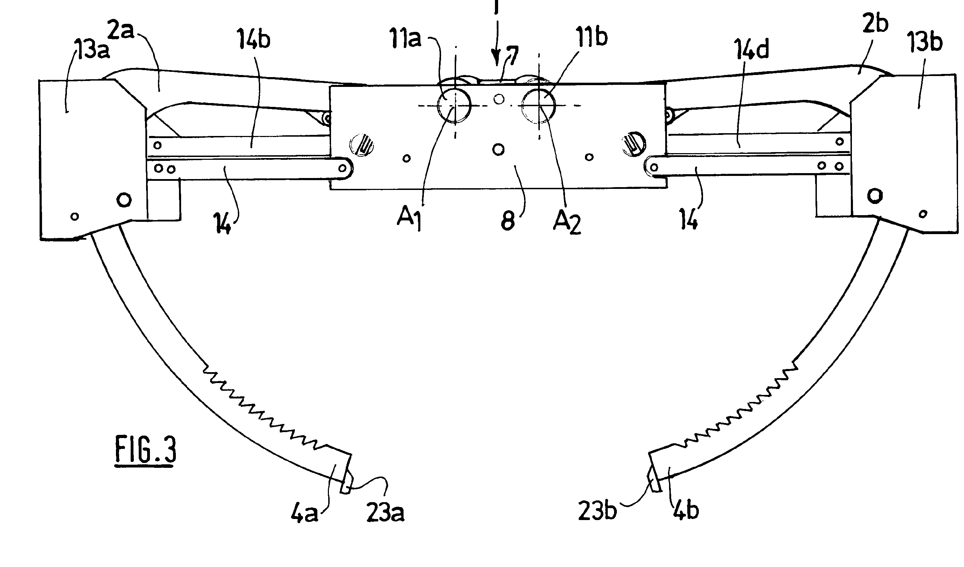

La barre 2a, 2b possède une première extrémité 3a, 3b centrale montée en rotation sur le support central 8 autour d'un axe A1 ou A2 sensiblement parallèle à l'axe longitudinal du véhicule et une seconde extrémité 4a, 4b latérale libre. Ainsi, les barres 2a, 2b sont mobiles entre une position effacée, représentée sur la figure 3, et une position déployée, représentée sur les figures 1 et 2.

Le support central 8 comprend deux plaques 9a, 9b sensiblement verticales et parallèles. L'espace situé entre les deux plaques 9a, 9b forme un logement 10 de réception des premières extrémités 3a, 3b des barres 2a, 2b. Les plaques 9a, 9b sont disposées respectivement de part et d'autre du plan des barres 2a, 2b.

La première extrémité 3a, 3b des barres 2a, 2b est pourvue d'un axe de rotation 11 a, 11 b s'étendant selon une direction perpendiculaire au plan des barres 2a, 2b. L'axe 11 a, 11 b est monté entre les deux plaques 9a, 9b dans des alésages 12a, 12b usinés dans les plaques 9a, 9b. Ainsi, les plaques 9a, 9b forment un palier supportant l'axe 11a, 11 b de rotation des barres 2a, 2b.

On remarquera que, lorsque les barres 2a, 2b sont dans leur position effacée, une partie de la portion des barres 2a, 2b s'étendant entre la première extrémité 3a, 3b et le coude est logé entre les plaques 9a, 9b. Avantageusement, l'extrémité supérieure des barres 3a, 3b lorsqu'elle sont dans leur position effacée s'étend sensiblement dans le même plan que les bords supérieurs des plaques 9a, 9b.

Dans le mode de réalisation représenté, le support central 8 est une pièce profilée en forme de U dont les branches latérales forment les plaques 9a, 9b sensiblement parallèles. Le support central 8 est par exemple réalisé dans un alliage léger tel que l'aluminium.

Avantageusement, les moyens de rappel élastique 5a, 5b, le système de déclenchement 6 et l'organe de verrouillage 7 sont disposés dans le logement 10 formé entre les plaques 9a, 9b.

Dans le mode de réalisation représenté, le dispositif de sécurité est muni de deux ressorts de compression 5a, 5b formant les moyens de rappel et permettant chacun d'entraîner le mouvement d'une barre 2a, 2b. La première extrémité des ressorts 5a, 5b est montée en rotation sur le support central 8 dans le logement 10 entre les deux plaques 9a, 9b autour d'un axe B1, B2 et la seconde extrémité est montée en rotation sur les barres 2a, 2b autour d'un axe C1, C2, situé à proximité de la première extrémité 3a, 3b des barres 2a, 2b.

Avantageusement, tel qu'il est représenté sur la figure 3, lorsque les barres 2a, 2b sont dans leur position effacée, les ressorts 5a, 5b sont entièrement logés entre les plaques 9a, 9b .

Dans le mode de réalisation représenté de façon détaillée sur la figure 2, le système de déclenchement est composé d'un actionneur à percuteur à explosif 6 disposé entre les plaques et entraînant le mouvement d'un organe de verrouillage 7 afin de libérer le mouvement des barres 2a, 2b vers leur position déployée. Avantageusement, l'actionneur 6 est un actionneur commun aux deux barres 2a, 2b.

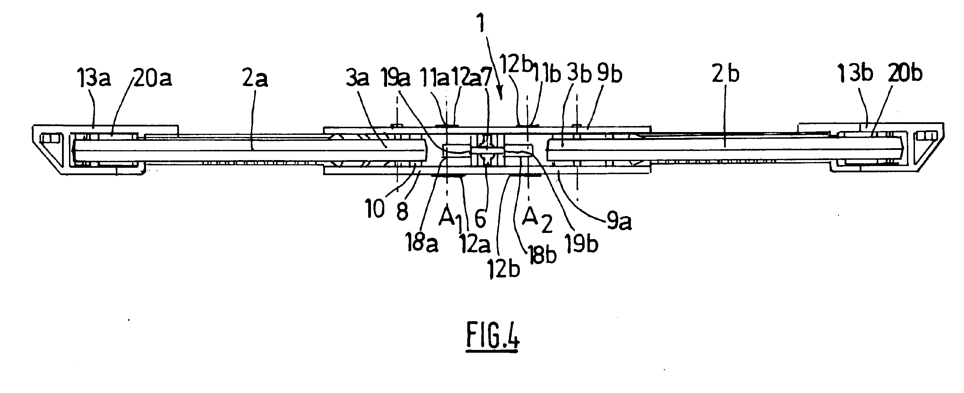

Dans le mode de réalisation représenté sur les figures 2 et 4, l'organe de verrouillage 7 est une pièce solidaire de la tête du percuteur. Les premières extrémités des barres sont pourvues de protubérances 17a, 17b munies de pièces très rigides 18a, 18b. Lorsque les barres 2a, 2b sont en position effacée, les parois latérales 19a, 19b de l'organe de verrouillage 7 sont en contact avec les pièces rigides 18a, 18b afin de maintenir les barres 2a, 2b en position effacée. Lorsque l'actionneur 7 est déclenché, l'organe de verrouillage 7 est déplacé vers le haut et les parois latérales 19a, 19b de l'organe de verrouillage 7 ne sont plus en contact avec les pièces rigides 18a, 18b des protubérances 17a, 17b. Ainsi, les barres 2a, 2b sont libérées de leur position effacée et se déplacent alors vers leur position déployée.

Le dispositif de sécurité 1 est pourvu de deux boîtiers latéraux 13a, 13b permettant de guider le mouvement de la seconde extrémité 4a, 4b libre de la barre 2a, 1 b et/ou de loger les systèmes anti-retour.

Avantageusement, les boîtiers latéraux sont des pièces profilées creuses munies d'un passage 20a, 20b des secondes extrémités 4a, 4b des barres 2a, 2b. Le passage 20a, 20b s'étend sensiblement verticalement. Dans un mode de réalisation, les boîtiers latéraux 13a, 13b sont également réalisés dans un alliage léger tel que l'aluminium.

Le dispositif de sécurité 1 comprend des systèmes anti-retour qui coopèrent avec la seconde extrémité 4a, 4b des barres 2a, 2b afin d'empêcher le retrait des barres 2a, 2b lorsqu'elles sont dans leur position déployée.

Les systèmes anti-retour comprennent un mécanisme à cliquet 21a, 21b coopérant avec des dents 22a, 22b formées à proximité de la seconde extrémité 4a, 4b des barres 2a, 2b. Lorsque la barre 2a, 2b est en position déployée, les dents 22a, 22b coopèrent avec le cliquet 21 a, 21 b pour empêcher le retrait de la barre vers sa position effacée. Ce type de systèmes anti-retour confère au dispositif de sécurité 1 une bonne rigidité car les barres 2a, 2b sont maintenues à leur deux extrémités 3a, 4a, 3b, 4b lorsqu'elle sont en position déployée.

Afin de limiter l'encombrement du dispositif anti-retour, le cliquet 21a, 21b est disposé vers l'intérieur du véhicule et les dents 22a, 22b sont formées sur une partie de la barre 2a, 2b orientée vers l'intérieur du véhicule.

La seconde extrémité 4a, 4b de chaque barre 2a, 2b comprend une saillie 23a, 23b coopérant avec une butée 24a, 24b lorsque les barres 2a, 2b sont dans leur position déployée. Avantageusement, la butée 24a, 24b, représentée sur la figure 2, est montée sur les boîtiers latéraux 13a, 13b, Lorsque la barre 2a, 2b se déplace vers sa position déployée, la saillie 23a, 23b vient contre la butée 24a, 24b afin d'immobiliser la barre 2a, 2b dans sa position déployée.

Les boîtiers latéraux 13a, 13b sont reliés au support central 8 par des barres de liaison 14a, 14b, 14c, 14d. Dans le mode de réalisation représenté, deux barres de liaison 14a, 14b, 14c, 14d sont disposées de chaque côté du support central 8 et possèdent une première extrémité solidaire du support central 8 et une seconde extrémité solidaire des boîtiers latéraux 13a, 13b. Les barres de liaison peuvent également être des pièces profilées en alliage léger.

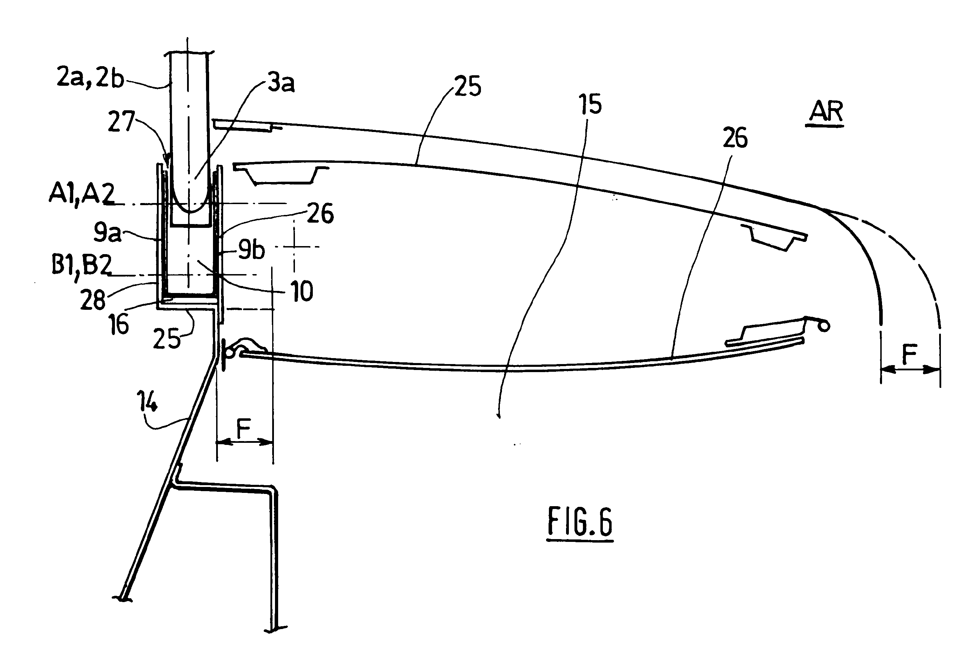

La figure 6 représente l'arrière d'un véhicule automobile équipé d'un dispositif de sécurité. Le véhicule est pourvu d'un couvercle 25 de coffre arrière et les éléments 26 du toit escamotable sont disposés sous ledit couvercle 25 lorsqu'ils sont dans leur position escamotée.

Un élément de structure 14 est disposé entre le coffre 15 et l'habitacle du véhicule et le dispositif est fixé sur cet élément de structure 14.

Dans le mode de réalisation représenté, l'élément de structure 14 est une cloison comportant à son extrémité supérieure un caisson 16 formé entre un décrochement 25 de la cloison et une plaque rigide 26 fixée à ladite cloison.

Ainsi, le caisson 16 est creux et formé par une paroi avant 28 : la cloison et une paroi arrière : la plaque rigide 26. Une ouverture supérieure 27 permet l'insertion du dispositif de sécurité 1 dans le caisson 16. Selon cette réalisation, l'encombrement du dispositif 1 est particulièrement réduit.

On remarquera alors que selon le mode de réalisation illustré sur la figure 6, l'encombrement du dispositif de sécurité 1 selon l'axe longitudinal du véhicule peut être diminué d'une longueur F. Ainsi, la longueur du coffre peut également être diminuée d'une longueur F.

## Revendications

1. Dispositif de sécurité (1) en cas de retournement d'un véhicule comprenant :
- au moins deux barres coudées (2a, 2b), chaque barre coudée (2a, 2b) possédant une première (3a, 3b) et une seconde extrémité (4a, 4b), lesdites barres (2a, 2b) étant déplaçables, en cas de retournement du véhicule, d'une position effacée vers une position déployée ;
- des moyens de rappel élastique (5a, 5b) pour le déploiement automatique des barres coudées (2a, 2b) ;
- un système de déclenchement (6) activé en cas de retournement du véhicule ;
- au moins un organe de verrouillage (7) qui maintient les moyens de rappel sous précontrainte et qui se libère grâce au système de déclenchement (6) libérant ainsi chaque barre coudée (2a, 2b) de sa position effacée ; et
- un support central (8) sur lequel est montée articulée la première extrémité (3a, 3b) des barres (2a, 2b) ;
ledit dispositif de sécurité (1) étant **caractérisé en ce que** le support central (8) comprend deux plaques (9a, 9b) sensiblement parallèles délimitant, entre elles, un logement (10), les deux plaques (9a, 9b) s'étendant respectivement de part et d'autre du plan des barres (2a, 2b) et les premières extrémités (3a, 3b) des barres coudées (2a, 2b) étant montées en rotation sur lesdites plaques et disposées à l'intérieur dudit logement (10).

2. Dispositif de sécurité (1) selon la revendication 1, **caractérisé en ce que** les premières extrémités (3a, 3b) des barres coudées (2a, 2b) sont pourvues d'un axe de rotation (11 a, 11 b) perpendiculaire au plan des barres (2, 2b) monté dans des alésages (12a, 12b) formées dans lesdites plaques (9a, 9b).

3. Dispositif de sécurité (1) selon la revendication 1 ou 2, **caractérisé en ce que** les moyens de rappel élastique sont des ressorts de compression (5a, 5b) disposés dans ledit logement (10), lesdits ressorts (5a, 5b) possédant une première extrémité montée articulée sur le support central (8) et une seconde extrémité montée articulée sur la barre coudée (2a, 2b), à proximité de sa première extrémité (3a, 3b).

4. Dispositif de sécurité (1) selon l'une des revendications 1 à 3, **caractérisé en ce que** le système de déclenchement (6) et l'organe de verrouillage (7) sont disposés dans ledit logement (10) entre les deux plaques (9a, 9b).

5. Dispositif de sécurité (1) selon l'une des revendications 1 à 4, **caractérisé en ce que** le support central (8) est une pièce profilée en forme de U, les deux plaques (9a, 9b) sensiblement parallèles formant les branches latérales du U.

6. Dispositif de sécurité (1) selon l'une des revendications 1 à 5, **caractérisé en ce qu'**il comprend en outre deux systèmes anti-retour coopérant avec la deuxième extrémité (4a, 4b) des barres (2a, 2b) lorsque lesdites barres (2a, 2b) sont en position déployée afin d'empêcher le retrait des barres (2a, 2b) vers leur position effacée.

7. Dispositif de sécurité (1) selon la revendication 6, **caractérisé en ce qu'**il comprend deux boîtiers latéraux (13a, 13b) dans lesquels sont logés les systèmes anti-retour.

8. Dispositif de sécurité (1) selon la revendication 7, **caractérisé en ce que** les boîtiers latéraux (13a, 13b) sont des pièces profilées.

9. Dispositif de sécurité (1) selon la revendication 7 ou 8, **caractérisé en ce qu'**il comprend en outre au moins deux barres de liaison (14a, 14b, 14c, 14d) reliant le support central (8) et les boîtiers latéraux (13a, 13b).

10. Dispositif de sécurité (1) selon l'une des revendications 7 à 9, **caractérisé en ce que** le support central (8) et/ou les boîtiers latéraux (13a, 13b) sont pourvus de moyens de fixation dudit dispositif (1) à un élément de structure (14) du véhicule.

11. Véhicule automobile **caractérisé en ce qu'**il est pourvu d'un dispositif de sécurité selon l'une des revendications 1 à 10.

12. Véhicule automobile selon la revendication 11, **caractérisé en ce qu'**il est équipé d'un élément de structure (14) disposé entre l'habitacle du véhicule et le coffre arrière (15), ledit élément de structure possédant à son extrémité supérieure un caisson creux (16) dans lequel est inséré ledit dispositif de sécurité (1).
